# EUROPÄISCHE PATENTANMELDUNG

(11) **EP 1 541 888 A1**
(43) Veröffentlichungstag der Anmeldung: **15.06.2005**
(21) Anmeldenummer: 04400062.8
(22) Anmeldetag: 29.11.2004
(51) Int. Cl.: F16D 23/14

(54) **Schwenkabstützung eines Kupplungsbetätigungsorgans**

(30) Priorität: 10.12.2003 DE 10357651
(71) Anmelder: ZF FRIEDRICHSHAFEN AG, 88046 Friedrichshafen (DE)
(72) Erfinder: Lindner, Kurt, 97464 Niederwerrn (DE); Obergfell, Ralf, 97497 Dingolshausen (DE)

(57) **Zusammenfassung**

Eine Schwenkabstützung zur schwenkbaren Abstützung eines Kupplungsbetätigungsorgans (12) an einer feststehenden Baugruppe, vorzugsweise an einem Getriebegehäuse, umfasst einen an der feststehenden Baugruppe angeordneten oder anzuordnenden ersten Abstützbereich (14) und einen an dem Kupplungsbetätigungsorgan (12) vorgesehenen zweiten Abstützbereich (24), wobei der erste Abstützbereich (14) eine konkave erste Abstützfläche (22) aufweist und der zweite Abstützbereich (24) eine konvexe zweite Abstützfläche (28) aufweist, die in schwenkbarer Abstützanlage an der ersten Abstützfläche (22) ist.

## Beschreibung

Die vorliegende Erfindung betrifft eine Schwenkabstützung zur schwenkbaren Abstützung wenigstens eines Kupplungsbetätigungsorgans an einer feststehenden Baugruppe.

Bei Antriebssystemen in Kraftfahrzeugen werden Reibungskupplungen häufig über schwenkbare Kupplungsbetätigungsorgane, wie z.B. Kupplunghebel bzw. Kupplungsgabeln, betätigt. Diese Kupplungshebel bzw. Kupplungsgabeln werden entweder manuell über ein Kupplungspedal oder durch eine Aktuatoranordnung mit einer Betätigungskraft beaufschlagt und leiten diese im Allgemeinen über ein Ausrücklager in die Reibungskupplung ein. Vor allem bei in kleinere Fahrzeuge einzugliedernden Antriebssystemen bzw. Kupplungssystemen besteht häufig ein Problem bei dem zur Verfügung stehenden Bauraum, so dass auch insbesondere im Betätigungssystem für die Reibungskupplungen Konflikte mit anderen Baugruppen entstehen können.

Es ist die Aufgabe der vorliegenden Erfindung, eine Schwenkabstützung zur schwenkbaren Abstützung eines Kupplungsbetätigungsorgans an einer feststehenden Baugruppe, wie z.B. einem Getriebegehäuse, mit kompakter Baugröße vorzusehen.

Erfindungsgemäß wird diese Aufgabe gelöst durch eine Schwenkabstützung zur schwenkbaren Abstützung wenigstens eines Kupplungsbetätigungsorgans an einer feststehenden Baugruppe, vorzugsweise an einem Getriebegehäuse, umfassend einen an der feststehenden Baugruppe angeordneten oder anzuordnenden ersten Abstützbereich und einen an dem Kupplungsbetätigungsorgan vorgesehenen zweiten Abstützbereich, wobei der erste Abstützbereich wenigstens eine konkave erste Abstützfläche aufweist und der zweite Abstützbereich eine konvexe zweite Abstützfläche aufweist, die in schwenkbarer Abstützanlage an der ersten Abstützfläche ist.

Durch Bereitstellen einer konkaven Abstützfläche an demjenigen Abstützbereich, der an sich feststeht und beispielsweise an einem Getriebe zu tragen ist, und gleichzeitiges Vorsehen einer konvexen Abstützfläche an dem an sich verschwenkbaren Bauteil, nämlich dem Kupplungsbetätigungsorgan, wird eine Verbindung nach Art eines Kugelgelenks bereitgestellt, die bei hoher Belastbarkeit nur sehr wenig Bauraum beansprucht.

Um sicherzustellen, dass auch im Transportzustand, also vor dem Eingliedern in ein Antriebssystem, die beiden Abstützbereiche bzw. die diese aufweisenden Komponenten sich nicht voneinander lösen, wird vorgeschlagen, dass eine Halteanordnung vorgesehen ist, durch welche der zweite Abstützbereich bewegbar an dem ersten Abstützbereich gehalten ist. Dabei kann beispielsweise vorgesehen sein, dass die Halteanordnung an dem ersten Abstützbereich einen Haltevorsprung aufweist, der in eine Halteaussparung des zweiten Abstützbereichs eingreift.

Eine sehr einfach zu realisierende und gleichzeitig sicher wirkende Ausgestaltungsvariante kann dadurch vorgesehen werden, dass der Haltevorsprung eine Öffnung in dem zweiten Abstützbereich durchsetzt und diesen zur Bereitstellung der Haltewirkung mit wenigstens einem Halteabschnitt hintergreift. Um dabei die Anzahl an Bauteilen gering halten zu können, wird vorgeschlagen, dass der wenigstens eine Halteabschnitt an dem Haltevorsprung ausgebildet ist.

Alternativ ist es selbstverständlich auch möglich, dass der wenigstens eine Halteabschnitt ein mit dem Haltevorsprung und dem zweiten Abstützbereich in Haltewechselwirkung stehendes oder bringares Halteelement umfasst, wobei beispielsweise vorgesehen sein kann, dass das wenigstens eine Halteelement ein Klammerungselement ist, das in einem ersten Klammerungsbereich an dem zweiten Abstützbereich gehalten ist und in einem zweiten Klammerungsbereich in Haltewechselwirkung mit dem Haltevorsprung steht oder bringbar ist. Das Halteelement kann beispielsweise als Drahtbügelelement ausgeführt sein und somit kostengünstig mit sehr hoher Freiheit hinsichtlich der Formgebung ausgestaltet werden.

Um die einer Verschwenkung des Kupplungsbetätigungsorgans entgegenwirkenden Kräfte so gering als möglich zu halten, wird weiter vorgeschlagen, dass an dem ersten Abstützbereich oder/und dem zweiten Abstützbereich die erste Abstützfläche bzw. die zweite Abstützfläche durch wenigstens ein reibungsminderndes Element bereitgestellt ist.

Zum Einsatz der erfindungsgemäßen Anordnung in Verbindung mit Doppelkupplungen bzw. Mehrfachkupplungen, welche mehrere Kupplungsbereiche aufweisen, die auch separat zu betätigen sind, kann vorgesehen sein, dass an dem ersten Abstützbereich eine Mehrzahl von ersten Abstützflächen vorgesehen ist, wobei an jeder ersten Abstützfläche ein Kupplungsbestätigungsorgan mit einer daran vorgesehenen zweiten Abstützfläche abgestützt oder abstützbar ist. Um hier ein gegenseitiges Stören der einzelnen Kupplungsbetätigungsorgane zu vermeiden, kann weiter vorgesehen sein, dass die ersten Abstützflächen bezüglich einer Abstützrichtung seitlich zueinander versetzt angeordnet sind und dass eines der Kupplungsbetätigungsorgane eine Aussparung aufweist, in welcher das andere der Kupplungsbetätigungsorgane wenigstens teilweise aufgenommen ist.

Die vorliegende Erfindung wird nachfolgend mit Bezug auf die beiliegenden Zeichnungen detailliert beschrieben. Es zeigt:
- Fig. 1: eine Schnittansicht einer ersten Ausgestaltungsart einer Abstützung für ein Kupplungsorgan;
- Fig. 2: eine Draufsicht auf eine alternative Ausgestaltungsart einer Abstützung für ein Kupplungsorgan, betrachtet in Blickrichtung II in Fig. 3;
- Fig. 3: die Schwenkabstützung der Fig. 2 im Schnitt, geschnitten längs einer Linie III-III in Fig. 2;
- Fig. 4: eine der Fig. 2 entsprechende Ansicht einer alternativen Schwenkabstützung, betrachtet in Blickrichtung IV in Fig. 5;
- Fig. 5: die Anordnung der Fig. 4, geschnitten längs einer Linie V-V in Fig. 4;
- Fig. 6: eine weitere Draufsicht auf eine alternative Schwenkabstützung, betrachtet in Blickrichtung VI in Fig. 7;
- Fig. 7: die Schwenkabstützung der Fig. 6, geschnitten längs einer Linie VII-VII in Fig. 6;
- Fig. 8: eine weitere Schnittansicht einer alternativen Schwenkabstützung;
- Fig. 9: eine weitere Schnittansicht einer alternativen Schwenkabstützung;
- Fig. 10: eine weitere Schnittansicht einer alternativen Schwenkabstützung;
- Fig. 11: eine der Fig. 1 entsprechende Ansicht einer erfindungsgemäßen Schwenkabstützung für eine Doppelkupplung.

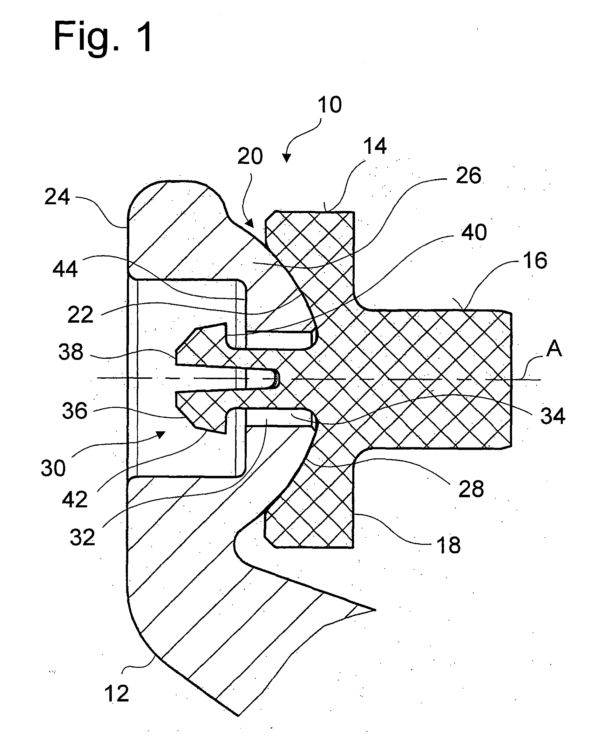

In Fig. 1 ist eine erste Variante einer erfindungsgemäßen Abstützanordnung 10 gezeigt. Diese Abstützanordnung 10 dient dazu, ein Kupplungsbetätigungsorgan 12, also beispielsweise einen Betätigungshebel oder eine Betätigungsgabel, an einem feststehenden Systembereich, beispielsweise einem Getriebe oder einem Getriebegehäuse, abzustützen. Dieses Betätigungsorgan 12 wird dann in seinem in der Fig. 1 nicht dargestellten Bereich von einem Betätigungsmechanismus, beispielsweise einem Aktuator oder über ein Kupplungspedal, mit einer Betätigungskraft beaufschlagt und leitet diese Betätigungskraft über ein Ausrücklager an eine Reibungskupplung eines Kraftfahrzeugs weiter.

Die Abstützanordnung 10 umfasst ein Abstützteil 14, das mit einem schaft- oder stiftartigen Befestigungsabschnitt 16 an dem feststehenden Systembereich angebracht wird. Bei der in Fig. 1 gezeigten Variante kann hierzu beispielsweise eine Bohrung oder eine Öffnung am Getriebegehäuse oder dergleichen vorgesehen sein, in welches das Abstützteil 14 mit seinem Abschnitt 16 eingesetzt und beispielsweise unter Presspassung gehalten wird. In einem Abstützkopf 18 weist das Abstützteil 16 eine Einsenkung bzw. Konkavität 20 auf, die eine erste Abstützfläche 22 bereitstellt. Diese erste Abstützfläche 22 weist eine Kugelkalottenform auf und bildet somit einen ersten Bestandteil einer kugelgelenkartigen Kopplung zwischen dem Abstützteil 14 und dem Betätigungsorgan 12. Das Betätigungsorgan 12 weist in seinem mit dem Abstützteil 14 zusammenwirkenden Abstützbereich 24 eine Auswölbung oder Konvexität 26 auf, die eine zur ersten Abstützfläche 22 komplementäre, kugelkalottenartig geformte zweite Abstützfläche 28 bereitstellt. Die beiden Abstützflächen 22, 28 liegen aneinander an, so dass auf Grund der Kugel- bzw. Kugelabschnittsgestaltung dieser beiden Flächen 22, 28 unter gegenseitiger Abgleitbewegung im Bereich dieser Flächen das Abstützteil 14 und das Betätigungsorgan 12 sich bezüglich einander bewegen bzw. verschwenken können.

Um insbesondere für den Transportzustand einen Zusammenhalt zwischen dem Abstützteil 14 und dem Betätigungsorgan 12 gewährleisten zu können, ist eine allgemein mit 30 bezeichnete Halteanordnung vorgesehen. Diese umfasst am Abstützteil 14 in axialer Verlängerung desselben ausgestaltet und vom Bereich der Abstützfläche 22 ausgehend einen Haltevorsprung 32, der in eine Öffnung bzw. Aussparung 34 am Abstützbereich 24 des Betätigungsorgans 12 eingreift bzw. diese durchsetzt. An seinem freien Endbereich weist der dort auch in zwei Zungenabschnitte 36, 38 aufgegliederte Haltevorsprung 32 Rastnasen 40, 42 auf, die eine größere Aufspreizung bzw. Ausdehnung aufweisen, als die Öffnung 34. Beim Heranführen des Betätigungsorgans 12 an das Abstützteil 14 wird der Haltevorsprung 32 im Bereich seiner Zungen 36, 38 verformt bzw. zusammengedrückt, so dass er durch die Öffnung 34 hindurchgeführt werden kann. Sind die Rastnasen 40, 42 durch die Öffnung 34 hindurchgetreten, so federn die Zungen 36, 38 auseinander und die Rastnasen 40, 42 hintergreifen das Betätigungsorgan 12 an einer von der zweiten Abstützfläche 28 abgewandt liegenden Rückseite 44.

Man erkennt in der Fig. 1, dass der Haltevorsprung 32 in Bezug auf die Öffnung 34 und die Materialstärke des Betätigungsorgans 12 im Bereich der Öffnung 34 so bemessen ist, dass sowohl eine Relativaxialbewegung ― in Richtung der Längsachse A des Abstützteils 14 ― als auch die zur Durchführung einer Kupplungsbetätigung erforderliche Schwenkbewegung unter Abgleiten der beiden Flächen 22, 28 aneinander erfolgen kann. Auf diese Art und Weise ist sichergestellt, dass durch diesen Haltevorsprung 32 bzw. die Halteanordnung 30 lediglich ein vollständiges Loslösen der beiden Bauteile 12, 14 voneinander verhindert ist, während dann, wenn ein Antriebssystem zusammengesetzt ist, die Halteanordnung 30 an sich unwirksam ist und lediglich so gestaltet sein muss, dass sie die erforderlichen Verschwenkung des unter Vorspannung mit seiner Abstützfläche 28 an der Abstützfläche 22 anliegenden Betätigungsorgans 12 nicht behindert.

Während auf Grund der zu übertragenden Kräfte das Betätigungsorgan 12 im Allgemeinen aus Metallmaterial gefertigt ist, kann das Abstützteil 14 auch aus Kunststoff gefertigt werden. Selbstverständlich kann auch Stahl bzw. Nichteisenmetall hier zum Einsatz gelangen.

Mit der erfindungsgemäßen Ausgestaltung der Abstützanordnung 10 wird ein sehr kompakter Aufbau geschaffen, der das Eingliedern des Betätigungsorgans 12 in sehr kleine Bauräume bei einfachem Aufbau ermöglicht.

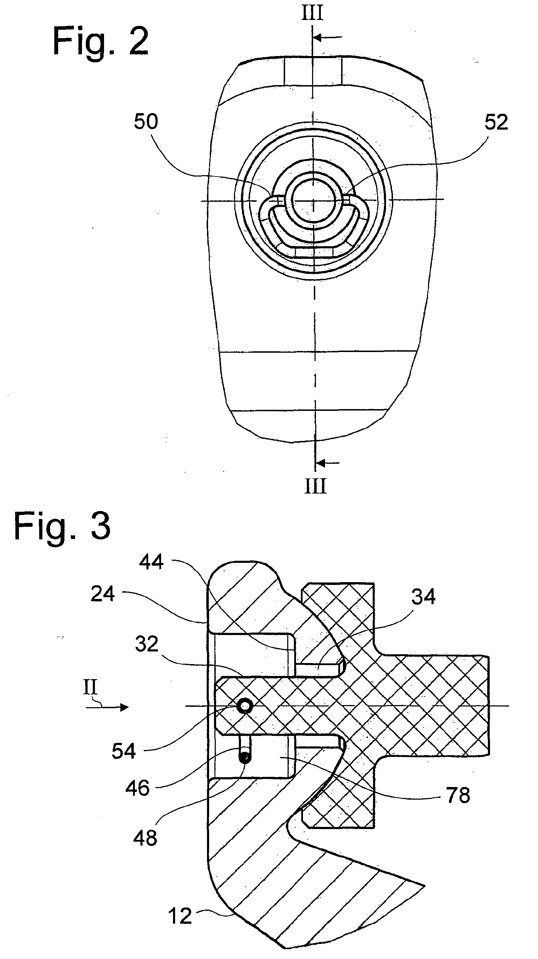

Eine abgewandelte Ausgestaltungsform ist in den Figuren 2 und 3 gezeigt. Komponenten, welche vorangehend beschriebenen Komponenten hinsichtlich Aufbau bzw. Funktion entsprechen, sind hier und auch in den nachfolgend noch zu beschreibenden Ausgestaltungsvarianten mit dem gleichen Bezugszeichen bezeichnet.

Man erkennt in der Ausgestaltungsform gemäß den Fig. 2 und 3, dass der Haltevorsprung 32 nicht mehr die zungenartige Aufgliederung zum Bereitstellen der Rastnasen aufweist. Vielmehr ist ein Halteelement 46 vorgesehen. Dieses in Form eines C-förmigen Drahtbügels 48 bereitgestellte Halteelement 46 ist im Bereich seiner sich aufeinander zu erstreckenden freien Enden 50, 52 in zugeordnete Öffnungen oder ggf. auch eine durchgehende Öffnung 54 im Haltevorsprung 32 eingesetzt. Das Halteelement 46 hintergreift das Betätigungsorgan 12 im Bereich seines Abstützbereichs 24 wieder an der Rückseite 44, indem es eine Gesamtabmessung aufweist, die zumindest in einer Dimension größer ist, als der Querschnitt der Öffnung 34.

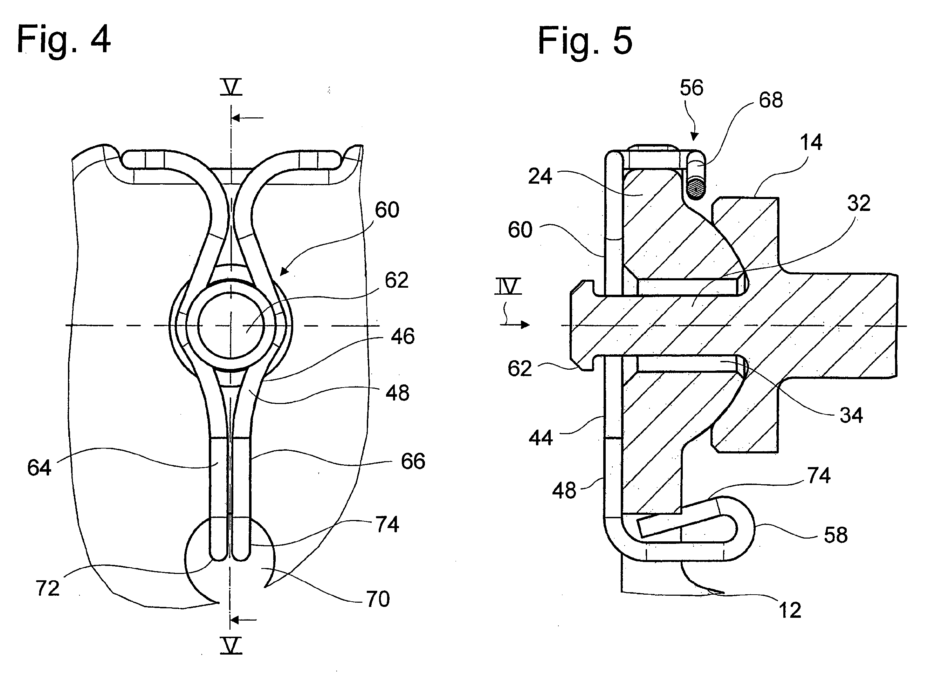

Bei der in den Figuren 4 und 5 gezeigten Variante ist ebenfalls ein aus einem Drahtbügel 48 bereitgestelltes Halteelement 46 vorhanden. Der Drahtbügel 48 bildet im Wesentlichen drei Wirkabschnitte. Mit den beiden Abschnitten 56, 58, die einen ersten Haltebereich definieren, ist der Drahtbügel 48 am Betätigungsorgan 12 festgehalten, während mit einem zwischen den Abschnitten 56, 58 liegenden weiteren Halteabschnitt 60 der Drahtbügel 48 den Haltevorsprung 32 an zwei Seiten umgreift. Der Haltevorsprung 32 weist in seinem freien Endbereich einen erweiterten Kopf 62 auf. Dieser erweiterte Kopf 62 hintergreift den Drahtbügel 48 in seinem Halteabschnitt 60, so dass auf Grund der Tatsache, dass der Haltebügel 48 in seinen beiden Abschnitten 56, 58 am Betätigungsorgan 12 gehalten ist, dieses also an der Rückseite 44 hintergreift, der Haltevorsprung 32 sich nicht aus der Öffnung 34 herausbewegen kann und somit das Abstützteil 14 mit dem Betätigungsorgan 12 gekoppelt ist.

Insbesondere erkennt man in den Figuren 4 und 5, dass der Drahtbügel 48 im Wesentlichen zwei nebeneinander verlaufende Schenkel 64, 66 bildet, die in ihrem zentralen Bereich etwas auseinander gebogen sind, um den Halteabschnitt 60 zu bilden. In einem den Halteabschnitt 56 bildenden Bereich sind die beiden Schenkel 64, 66 durch einen Verbindungsabschnitt 68 miteinander fest verbunden, der so gebogen ist, dass er bezüglich der Positionierung der Schenkel 64, 66 sich an der anderen Seite des Abstützbereichs 24 erstreckt und somit der Abstützbereich 24 zwischen diesem Verbindungsabschnitt 68 und den Schenkeln 64, 66 liegt. In ihrem freien Endbereich sind die Schenkel 64, 66 derart umgebogen, dass sie durch eine weitere Öffnung 70 des Betätigungsorgans 12 hindurchgreifen und dieses ebenfalls im Bereich von jeweiligen Halteenden 72, 74 hintergreifen, so dass eine Festklemmung des Drahtbügels 48 am Betätigungsorgan 12 erlangt wird.

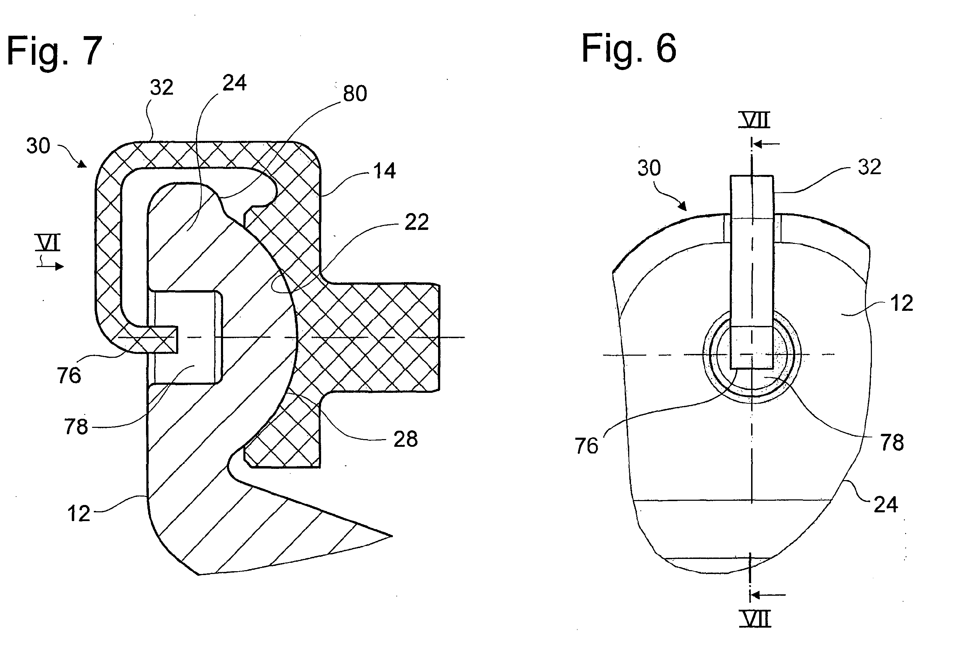

Die Figuren 6 und 7 zeigen eine Ausgestaltungsform, bei welcher der an das Abstützteil 14 integral angeformte Haltevorsprung 32 der Halteanordnung 30 das Betätigungsorgan 12 nicht in einer dafür vorgesehenen Öffnung durchsetzt, sondern den Abstützbereich 24 desselben umgreift und mit einem in Richtung auf die erste Abstützfläche 22 sich wieder zu erstreckenden Endabschnitt 76 in eine Aussparung 78, die auch bei den anderen Ausgestaltungsformen vorhanden ist, eingreift. Dieses Eingreifen bzw. der in Fig. 7 erkennbare Montagezustand kann durch Heranführen des Betätigungsorgans 12 mit seiner Abstützfläche 28 an die Abstützfläche 22 und dabei vorgenommener Verformung des Haltevorsprungs 32 erfolgen. Auf Grund eines an die Abstützfläche 28 sich anschließenden Blockierabschnitts 80 ist eine derartige Verschwenkung des Betätigungsorgans, dass dieses sich vollständig aus dem Umgriff des Haltevorsprungs 32 herausbewegen könnte, nicht möglich.

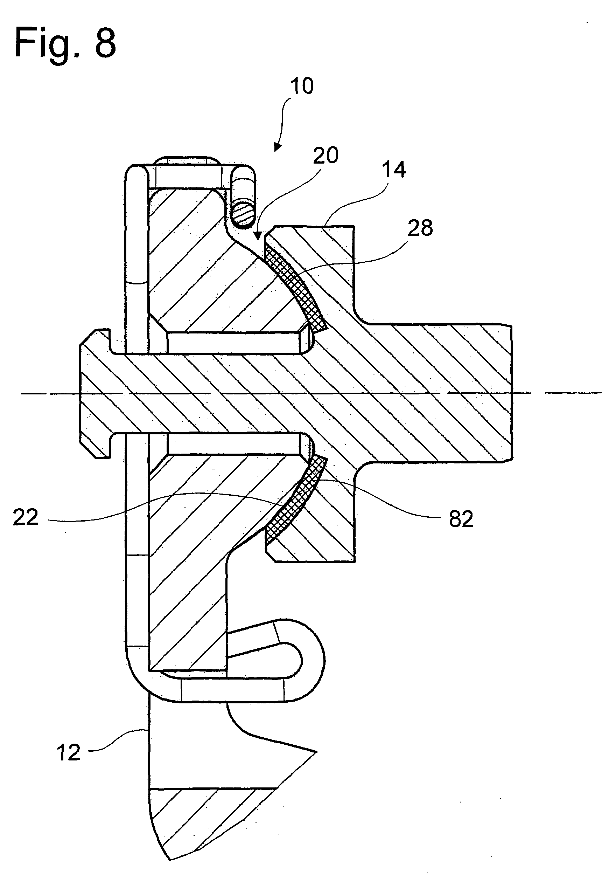

In Fig. 8 ist eine Weiterbildung der bereits vorangehend mit Bezug auf die Figuren 4 und 5 hinsichtlich des Drahtbügels 48 detailliert beschriebenen Ausgestaltungsform gezeigt. Bei der in Fig. 8 gezeigten Variante ist an dem Abstützteil 14 in dessen Einsenkung bzw. Konvexität 20 ein schalenartiges Einsatzteil 82 eingelegt bzw. eingesetzt, welches nunmehr die Abstützfläche 22 bereitstellt. Dieses Einsatzteil 82 ist aus reibungsarmem Material, beispielsweise Teflon oder dergleichen, gebildet, das einerseits den auftretenden Lasten gewachsen ist, andererseits jedoch einen verminderten Reibkontakt zur Abstützfläche 28 sicherstellt. Selbstverständlich können hier auch mehrere einzelne Reibelemente als Einlageteile vorgesehen sein. Derartige Einsatzelemente oder auch das Einsatzelement 82 der Fig. 8 können am Abstützteil 14 durch Verklebung festgelegt sein.

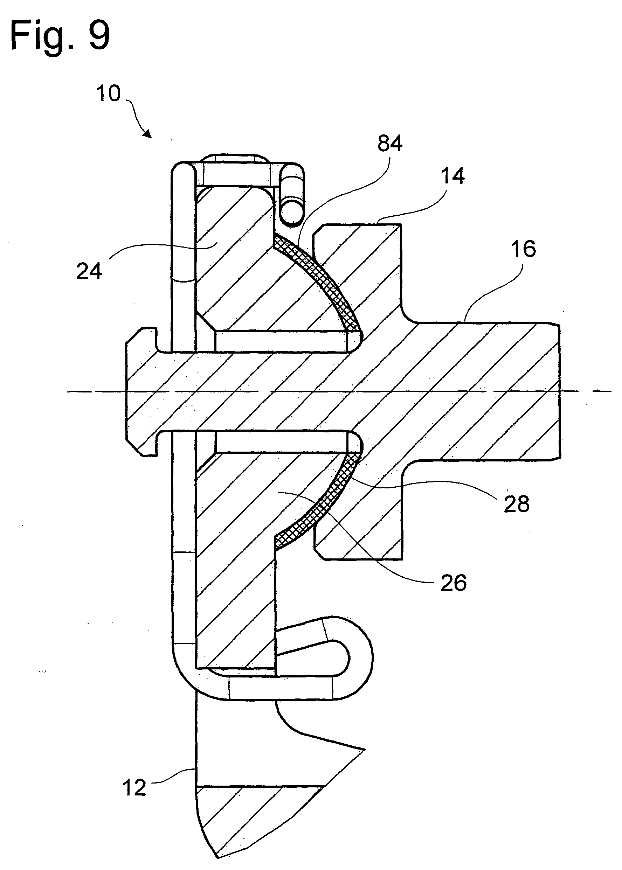

In Fig. 9 ist eine Variante gezeigt, bei welcher ein derartiges reibungsminderndes Bauteil nicht am Abstützteil 14 vorgesehen ist, sondern die Ausformung oder Konvexität 26 im Abstützbereich 24 des Betätigunsgorgans 12 mit einem derartigen reibungsmindernden und schalenartig ausgestalteten Teil 84 versehen ist. Auch hier kann eine Klebeverbindung vorgesehen sein. Weiter ist es selbstverständlich, dass auch hier an Stelle eines einzigen Bauteils 84 mehrere Bauteile in ihrer Gesamtheit dann die zweite Abstützfläche 28 bereitstellen können.

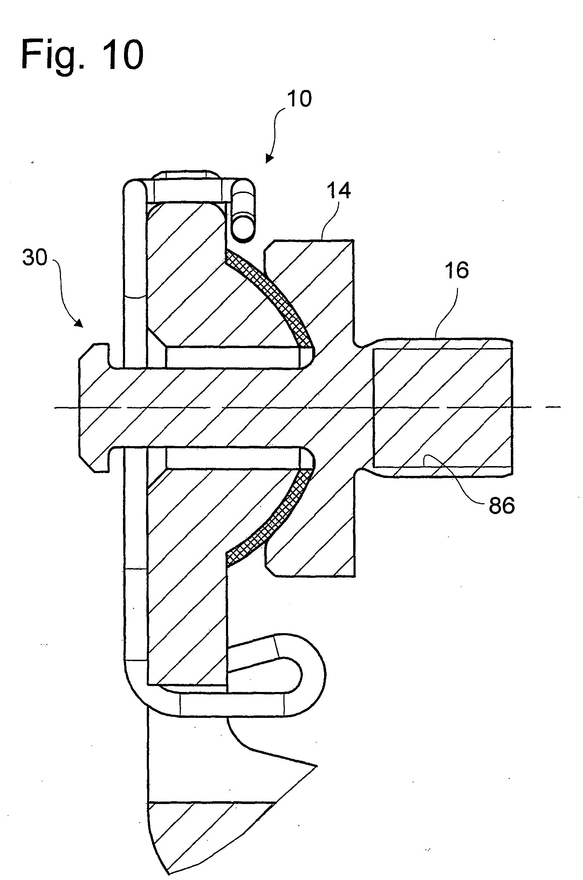

In Fig. 10 ist eine Ausgestaltungsvariante gezeigt, bei welcher am Abstützteil 14 in dessen Abschnitt 16 eine Innengewindeöffnung 86 vorgesehen ist. In diese kann ein am Getriebegehäuse oder einer sonstigen feststehenden Systemkomponente vorgesehener Gewindevorsprung eingeschraubt werden, so dass auf diese Art und Weise eine feste Verbindung zwischen dem Abstützteil 14 und der feststehenden Komponente erlangt werden kann.

Ansonsten kann die in dieser Variante vorgesehene Abstützanordnung 10 so aufgebaut sein, wie vorangehend beschrieben, wobei hier nicht notwendigerweise die in Fig. 10 auch dargestellte und vorangehend mit Bezug auf die Fig. 9 beschriebene Ausgestaltungsform verwendet werden muss. Auch alle anderen Ausgestaltungsvarianten, insbesondere auch hinsichtlich der Halteanordnung 30, können hier zum Einsatz gelangen.

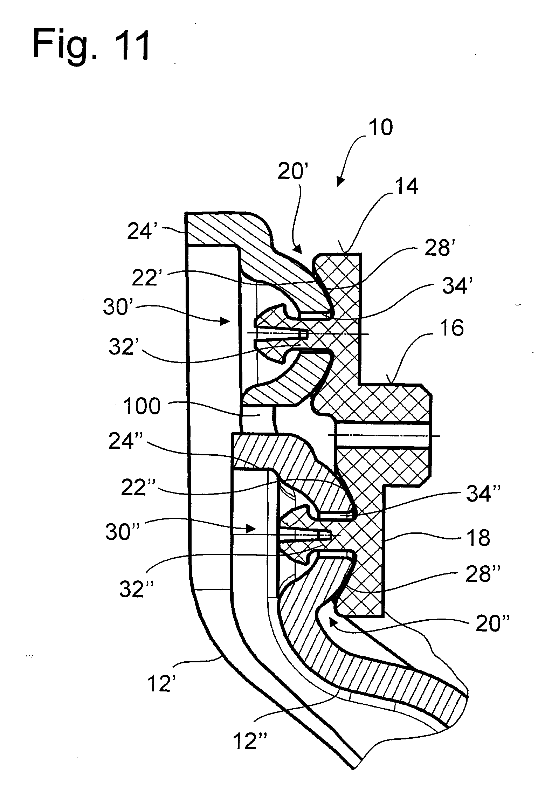

In Fig. 11 ist eine weitere Variante einer erfindungsgemäßen Schwenkabstützung gezeigt. Auch hier sind Komponenten, welche vorangehend beschriebenen Komponenten bzw. Systembereichen entsprechen, mit dem gleichen Bezugszeichen bezeichnet.

Die in Fig. 11 gezeigte Schwenkabstützung 10 ist für den Einsatz in Verbindung mit einer Doppelkupplung mit zwei voneinander unabhängig zu betätigenden Kupplungsbereichen vorgesehen. Zu diesem Zwecke sind in entsprechender Weise zwei Betätigungsorgane 12' und 12" vorgesehen, die jeweils über einen Abstützbereich 24' bzw. 24" verfügen, wie er vorangehend auch mit Bezug auf die Fig. 1 detailliert erläutert worden ist. In Zuordnung zu diesen beiden Betätigungsorganen 12' und 12" sind an dem Abstützteil 14 im Abstützkopf 18 desselben seitlich nebeneinander versetzt ― seitlich bezogen auf diejenige Richtung, in welcher im Wesentlichen die Abstützkraft in das Abstützteil 14 eingeleitet wird ― zwei Konkavitäten 20' bzw. 20" mit entsprechenden ersten Abstützflächen 22' bzw. 22' vorgesehen. Hierzu ist es möglich, dass der Abstützkopf 18 ausgehend vom Abschnitt 16 zwei seitliche Ansätze aufweist, die dann die jeweiligen Konkavitäten 20' bzw. 20" aufweisen.

Da die beiden Betätigungsorgane 12' und 12" im Allgemeinen im gleichen Raumbereich mit einem diese beaufschlagenden Systembereich zusammenwirken bzw. auch im gleichen Raumbereich mit einem Drehentkopplungslager zur Krafteinleitung in einen jeweiligen Kupplungsbereich zusammenwirken, ist weiter vorgesehen, dass in dem Betätigungsorgan 12' eine Aussparung 100' gebildet ist, in welcher im Wesentlichen das andere Betätigungsorgan 12" aufgenommen ist. Beispielsweise kann das Betätigungsorgan 12' ausgehend von dem Abstützbereich 24" Armabschnitte aufweisen, die zwischen sich das andere Betätigungsorgan 12" aufnehmen.

Man erkennt in Fig. 11 weiter, dass die beiden ersten Abstützflächen 22' und 22" in der Abstützrichtung zueinander versetzt liegen, so dass für die Betätigungsorgane 12' und 12" die gewünschte Lage vorgegeben werden kann.

Ansonsten entspricht auch diese Ausgestaltungsvariante insbesondere auch hinsichtlich der Ausgestaltung der Halteanordnungen 30' bzw. 30" der mit Bezug auf die Fig. 1 beschriebenen Anordnung. Selbstverständlich könnten hier auch die bei den anderen Ausgestaltungsformen eingesetzten Halteanordnungen zum Einsatz gelangen.

## Patentansprüche

1. Schwenkabstützung zur schwenkbaren Abstützung eines Kupplungsbetätigungsorgans (12) an einer feststehenden Baugruppe, vorzugsweise an einem Getriebegehäuse, umfassend einen an der feststehenden Baugruppe angeordneten oder anzuordnenden ersten Abstützbereich (14) und einen an dem Kupplungsbetätigungsorgan (12) vorgesehenen zweiten Abstützbereich (24), wobei der erste Abstützbereich (14) eine konkave erste Abstützfläche (22) aufweist und der zweite Abstützbereich (24) eine konvexe zweite Abstützfläche (28) aufweist, die in schwenkbarer Abstützanlage an der ersten Abstützfläche (22) ist.

2. Schwenkabstützung nach Anspruch 1,
**dadurch gekennzeichnet, dass** eine Halteanordnung (30) vorgesehen ist, durch welche der zweite Abstützbereich (24) bewegbar an dem ersten Abstützbereich (14) gehalten ist.

3. Schwenkabstützung nach Anspruch 2,
**dadurch gekennzeichnet, dass** die Halteanordnung (30) an dem ersten Abstützbereich (14) einen Haltevorsprung (32) aufweist, der in eine Halteaussparung (34, 78; 78) des zweiten Abstützbereichs (24) eingreift.

4. Schwenkabstützung nach Anspruch 3,
**dadurch gekennzeichnet, dass** der Haltevorsprung (32) eine Öffnung (34) in dem zweiten Abstützbereich (24) durchsetzt und diesen zur Bereitstellung der Haltewirkung mit wenigstens einem Halteabschnitt (40, 42; 46) hintergreift.

5. Schwenkabstützung nach Anspruch 4,
**dadurch gekennzeichnet, dass** der wenigstens eine Halteabschnitt (40, 42) an dem Haltevorsprung (32) ausgebildet ist.

6. Schwenkabstützung nach Anspruch 4,
**dadurch gekennzeichnet, dass** der wenigstens eine Halteabschnitt (46) ein mit dem Haltevorsprung (32) und dem zweiten Abstützbereich (24) in Haltewechselwirkung stehendes oder bringares Halteelement (46) umfasst.

7. Schwenkabstützung nach Anspruch 6,
**dadurch gekennzeichnet, dass** das wenigstens eine Halteelement (46) ein Klammerungselement (48) ist, das in einem ersten Klammerungsbereich (56, 58) an dem zweiten Abstützbereich (24) gehalten ist und in einem zweiten Klammerungnsbereich (60) in Haltewechselwirkung mit dem Haltevorsprung (32) steht oder bringbar ist.

8. Schwenkabstützung nach Anspruch 7,
**dadurch gekennzeichnet, dass** das Halteelement (46) ein Drahtbügelelement (48) ist.

9. Schwenkabstützung nach einem der Ansprüche 1 bis 8,
**dadurch gekennzeichnet, dass** an dem ersten Abstützbereich (14) oder/und dem zweiten Abstützbereich (24) die erste Abstützfläche (22) bzw. die zweite Abstützfläche (28) durch wenigstens ein reibungsminderndes Element (82; 84) bereitgestellt ist.

10. Schwenkabstützung nach einem der Ansprüche 1 bis 9,
**dadurch gekennzeichnet, dass** an dem ersten Abstützbereich (14) eine Mehrzahl von ersten Abstützflächen (22', 22") vorgesehen ist, wobei an jeder ersten Abstützfläche 22', 22" ein Kupplungsbestätigungsorgan (12', 12") mit einer daran vorgesehenen zweiten Abstützfläche (28', 28") abgestützt oder abstützbar ist.

11. Schwenkabstützung nach Anspruch 10,
**dadurch gekennzeichnet, dass** die ersten Abstützflächen (22', 22") bezüglich einer Abstützrichtung seitlich zueinander versetzt angeordnet sind.

12. Schwenkabstützung nach Anspruch 10 oder 11,
**dadurch gekennzeichnet, dass** eines (12') der Kupplungsbetätigungsorgane (12', 12") eine Aussparung (100) aufweist, in welcher das andere (12") der Kupplungsbetätigungsorgane (12', 12") wenigstens teilweise aufgenommen ist.
